# FASCICULE DE BREVET EUROPEEN

(11) **EP 1 629 585 B1**
(45) Date de publication et mention de la délivrance du brevet: **18.08.2010**
(21) Numéro de dépôt: 04767214.2
(22) Date de dépôt: 01.06.2004
(51) Int. Cl.: H02K 1/17

(54) **Moteur électrique de démarreur de véhicule automobile**
Elektromotor eines Fahrzeuganlassers
Electrical motor of a vehicle starter

(30) Priorité: 30.05.2003 FR 0306562
(43) Date de publication de la demande: 01.03.2006
(73) Titulaire: VALEO EQUIPEMENTS ELECTRIQUES MOTEUR, 94017 Créteil Cedex (FR)
(72) Inventeur: DE GODOY, Marcos, Jadim Sao Paulo, Americana, SP (BR); DROZDEK, Marius, F-38280 Villette d'Anthon (FR)
(74) Mandataire: Gamonal, Didier
(86) Numéro de dépôt international: PCT/FR2004/001339
(87) Numéro de publication internationale: WO 2004/107528

(56) Documents cités:
- EP-A- 1 061 632
- FR-A- 2 588 427
- JP-U- 56 051 476
- US-A- 3 790 830
- US-A- 4 580 072
- US-A- 4 745 319

## Description

### Domaine technique de l'invention

L'invention concerne un moteur électrique, de démarreur pour véhicule automobile comprenant un dispositif de fixation d'aimants permanents à l'intérieur d'une culasse cylindrique d'un inducteur, comprenant des agrafes élastiques agencées entre les aimants permanents pour assurer le positionnement angulaire et le maintien axial et radial desdits aimants contre la paroi interne de la culasse, chaque agrafe étant réalisée à partir d'une tôle métallique comprenant une âme de retenue de deux aimants consécutifs.

### État de la technique

Un moteur à aimants permanents d'un démarreur électrique comporte un inducteur fixe formant le stator, et un induit rotatif constituant le rotor accouplé au lanceur. L'inducteur est composé d'une culasse métallique tubulaire dont la paroi interne supporte une pluralité d'aimants permanents à polarités hétéropolaires, destinés à produire un champ inducteur. Les aimants permanents sont conformés selon des segments cylindriques, en étant angulairement répartis à intervalles réguliers à l'intérieur de la culasse, et séparés uniformément de l'induit par un entrefer radial.

La fixation des aimants permanents sur la paroi interne de la culasse, s'effectue généralement au moyen d'agrafes s'étendant dans la direction longitudinale dans les intervalles ménagés entre les aimants permanents. La fixation des agrafes assure d'une manière connue les fonctions suivantes :
- écartement entre les aimants pour créer un champ inducteur uniforme dans l'entrefer ;
- maintien axial et radial des aimants dans la culasse en s'opposant aux forces mécaniques (vibrations, chocs), et aux forces d'attraction magnétique lors du fonctionnement du moteur ;
- immobilisation en rotation des aimants en s'opposant au couple développé par l'induit ;
- positionnement angulaire stable entre les aimants et les balais du collecteur pour permettre une commutation correcte du moteur.

Différents types d'agrafage des aimants permanents sont connus :
- soit en utilisant des agrafes indépendantes ayant un profil en U, réalisées à partir d'une tôle métallique pliée, pourvue de rabats pour le maintien radial des aimants. Une agrafe est intercalée entre deux aimants permanents consécutifs, il y a donc autant d'agrafes que d'aimants. Les agrafes ne sont pas liées entre elles. Le maintien des agrafes sur la paroi interne de la culasse s'effectue par insertion radiale de picots dans des trous des agrafes. Une autre solution connue propose de clipper et de positionner les agrafes en butée sur des bossages ou dents internes de la culasse.
- soit en montant les agrafes sur une couronne cintrée permettant de supporter la totalité des aimants permanents. L'ensemble couronne et agrafes peut être fabriqué par découpage et pliage d'une même tôle métallique, et la fixation des agrafes à la culasse est identique à celui décrit précédemment.
- soit en faisant usage de deux couronnes de support, de sections circulaires et en tôle métallique, destinées à maintenir les extrémités opposées des aimants permanents. Des index de calage sont prévus sur les couronnes pour le positionnement des aimants. Les couronnes circulaires sont fixées à l'intérieur de la culasse par les mêmes procédés précités.

Dans tous les cas décrits précédemment, les aimants constituent un sous-ensemble avec les agrafes ou couronnes circulaires. Ce sous-ensemble est emmanché axialement dans la culasse, puis positionné et immobilisé par les picots ou les clips.

Les agrafes nécessitent de bonnes propriétés élastiques. Elles sont donc réalisées dans des aciers à dureté élevée.

Quant à la culasse, pour permettre le passage d'un flux magnétique le plus important possible, elle est réalisée en acier doux, donc à faible dureté.

Lors d'une introduction imprécise du sous-ensemble dans la culasse, les agrafes ou les couronnes circulaires de maintien peuvent accrocher et racler la paroi intérieure de la culasse, avec les inconvénients suivants :
- formation de copeaux par arrachement de matière de la culasse. L'attraction magnétique de ces copeaux vers la surface des aimants permanents risque de polluer l'intérieur du moteur électrique, et de gêner la bonne rotation de l'induit par rapport à l'inducteur ;
- déformation des agrafes, rendant impossible le montage du sous-ensemble dans la culasse.

Il en résulte un risque de non qualité sur le montage et sur le fonctionnement correct du démarreur.

Pour éviter ces inconvénients, l'opération d'emmanchement axial devient délicate, et nécessite :
- un centrage précis du sous-ensemble aimants et agrafes par rapport à la culasse cylindrique ;
- et une vitesse d'emmanchement lente.

Ces impératifs ralentissent alors le flux de production, et impliquent des coûts de fabrication supplémentaires.

La demande de brevet EP 1 061 632 décrit une machine électrique comprenant un rotor et des aimants fixés sur un carter à l'aide d'éléments élastiques interposés entre lesdits aimants. Ces éléments élastiques sont recouverts d'un revêtement en élastomère pour faciliter le glissement desdits éléments élastiques dans le carter.

Le brevet US-A-4 745 319 décrit un moteur électrique comprenant une pluralité d'aimants permanents montés dans une culasse et des éléments de maintien desdits aimants, chacun des éléments de maintien étant inséré entre deux aimants consécutifs. Chaque élément de maintien comporte des portions élastiques destinées à bloquer axialement les aimants contre une paroi intérieure de la culasse, lesdites portions élastiques s'étendant contre la paroi intérieure de la culasse.

Le demande de brevet FR-A-2 588 427 décrit un inducteur de moteur électrique comportant des aimants permanents montés sur une surface intérieure d'une enveloppe cylindrique, et des agrafes élastique comprenant des moyens d'arrêt destinés à bloquer axialement lesdits aimants.

La demande de brevet JP 56-51476 U décrit un moteur selon le préambule de la revendication 1.

### Objet de l'invention

L'invention a pour but de pallier ces inconvénients, et de faciliter l'introduction axiale et le positionnement de l'inducteur à aimants permanents dans la culasse du moteur électrique.

L'invention concerne un dispositif tel que défini dans la revendication 1. Selon l'invention, l'arête de chaque agrafe qui pénètre en premier dans la culasse est écartée de la culasse par au moins un bossage situé sur l'âme en retrait de l'arête, et entre deux ailettes de blocage axial des aimants. L'âme de chaque agrafe est incurvée en prenant appui contre la paroi interne de la culasse.

Un tel dispositif permet ainsi d'atteindre un double objectif, consistant d'une part à faciliter le montage axial de l'ensemble agrafes et aimants sans détérioration de l'inducteur, et d'autre part à assurer le maintien axial et radial des aimants avec un centrage précis par rapport à la culasse.

### Description sommaire des dessins

D'autres avantages et caractéristiques ressortiront plus clairement de la description qui va suivre d'un procédé de montage selon l'invention donné à titre d'exemple non limitatif, et représenté aux dessins annexés, dans lesquels :
- la figure 1 montre une vue schématique en perspective d'un inducteur à aimants permanents assemblés à la culasse par des agrafes selon l'invention ;
- la figure 2 montre une vue en coupe longitudinale selon la ligne 2-2 de la figure 3;
- la figure 3 représente une vue en coupe transversale selon la ligne 3-3 de la figure 2 ;
- la figure 4 est une vue de détail d'une agrafe de la figure 3 ;
- la figure 5 montre une vue en perspective d'une agrafe selon l'invention ;
- la figure 6 représente une vue partielle en coupe de l'extrémité de l'agrafe de la figure 5 agencée sur la culasse ;
- la figure 7 est une vue identique de la figure 5 d'un exemple ;
- la figure 8 représente une vue partielle en coupe de l'extrémité de l'agrafe de la figure 7 agencée sur la culasse.

### Description de modes préférentiels de réalisation de l'invention

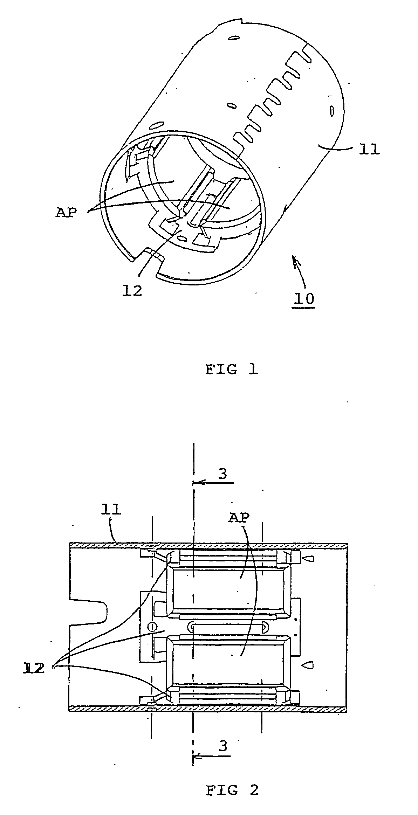

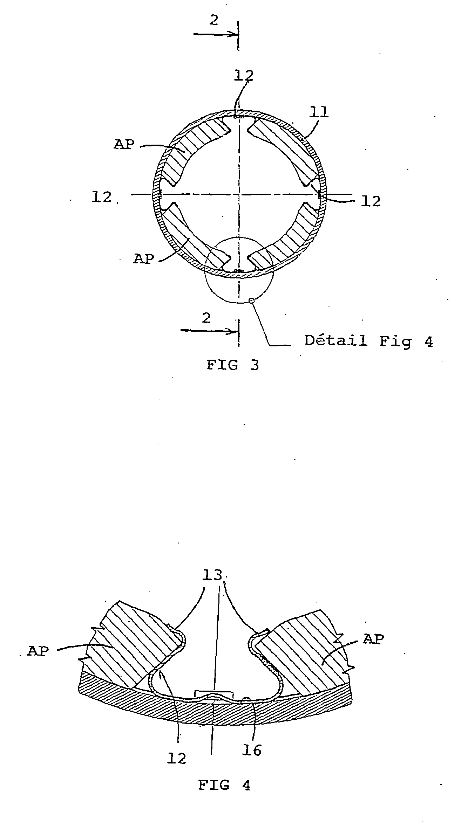

Sur les figures 1 à 6, un inducteur 10 est composé d'une culasse 11 métallique tubulaire, et d'une pluralité d'aimants permanents AP en formes de segments cylindriques, angulairement répartis à intervalles réguliers à l'intérieur de la culasse 11 en fer doux. Le maintien axial et radial des aimants AP dans la culasse 11 s'effectue au moyen d'agrafes 12 élastiques insérées entre les aimants AP. Chaque agrafe 12 est réalisée à partir d'une tôle métallique, par exemple pliée en U et équipée de rabats 13 dans la zone centrale pour le maintien radial des aimants AP. Des ailettes 14, 15 de blocage sont avantageusement prévues aux extrémités des agrafes 12 pour assurer le positionnement axial stable des aimants permanents AP. En position de fixation, l'âme 16 incurvée de chaque agrafe 12 prend appui contre la paroi interne de la culasse 11.

Dans une première phase, l'ensemble aimants permanents AP et agrafes 12 est assemblé dans un outillage spécifique. Dans une deuxième phase, l'outillage est actionné pour resserrer l'ensemble, et le positionner sur un diamètre légèrement inférieur à celui de l'intérieur de la culasse 11 cylindrique. Dans une troisième phase, la culasse 11 vient coiffer partiellement l'ensemble, et l'outillage est actionné pour desserrer l'ensemble qui, sous l'effet des agrafes 12 qui font ressort, se plaque sur le diamètre intérieur de la culasse 11. L'inducteur 10 est alors sorti de l'outillage pour être placé dans une presse qui termine l'emmanchement axial de l'ensemble dans la culasse 11.

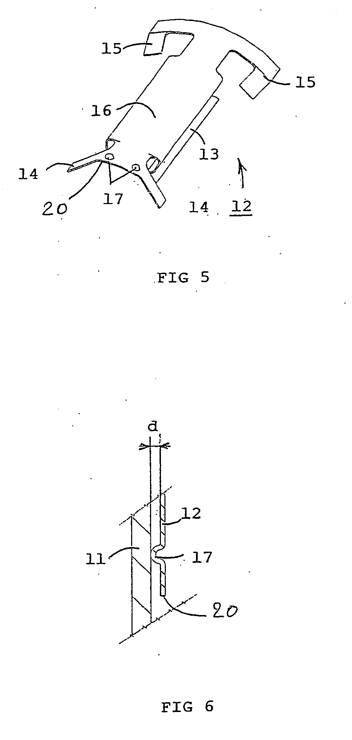

Pour éviter l'accrochage des agrafes 12 sur la paroi intérieure de la culasse 11, une première solution (figures 5 et 6) consiste à prévoir deux bossages 17 de formes arrondies, lesquelles sont réalisés sur les agrafes lors de l'opération de découpe. Ces bossages 17 sont par exemple agencés entre les deux ailettes 14 à l'extrémité 20 pénétrant en premier dans la culasse, de manière à faciliter le glissement des agrafes 12 sur la paroi interne de la culasse 11. Chaque agrafe 12 est écartée de la paroi interne de la culasse 11 par un faible intervalle d radial. Le contact entre l'arête de découpe de l'agrafe 12 et la culasse 11 est ainsi évité.

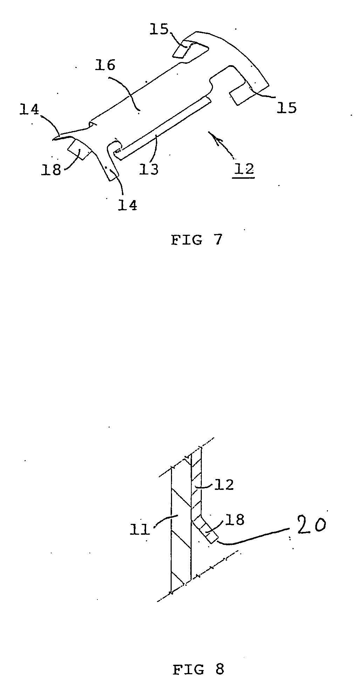

Dans l'exemple illustré aux figures 7 et 8, l'extrémité 20 de l'agrafe 12 du côté des ailettes 14, est repliée vers le centre de la culasse 11 en formant une languette 18 biseautée destinée à éviter le contact de l'arête vive contre la surface interne de la culasse 11 lors de la course d'emmanchement.

## Revendications

1. Moteur électrique de démarreur de véhicule automobile comprenant :
- un inducteur comportant des aimants permanents à l'intérieur d'une culasse cylindrique de l'inducteur;
- un dispositif de fixation des aimants permanents (AP) à l'intérieur de la culasse (11) cylindrique de l'inducteur (10) du moteur électrique, comprenant des agrafes (12) élastiques agencées entre les aimants permanents (AP) pour maintenir lesdits aimants contre la paroi interne de la culasse (11), chaque agrafe (12) étant réalisée à partir d'une tôle métallique comprenant une âme (16) de retenue de deux aimants (AP) consécutifs, l'extrémité (20) de chaque agrafe (12), pénétrant en premier dans la culasse (11) lors de l'insertion des aimants permanents (AP), comportant des moyens pour faciliter le glissement axial des agrafes sur la paroi interne cylindrique de la culasse (11) en évitant tout contact avec une arête terminale de l'extrémité (20) de ladite agrafe contre la paroi interne de la culasse (11), **caractérisé en ce que** les moyens sont constitués par au moins un bossage (17) prévu sur l'âme (16) pour écarter l'arête de chaque agrafe de la culasse.

2. Moteur selon la revendication 1, **caractérisé en ce que** ledit bossage (17) est situé en retrait de l'arête, et entre deux ailettes (14) de blocage axial des aimants (AP).

3. Moteur selon la revendication 1 ou 2, **caractérisé en ce que** le bossage (17) à une forme arrondie.

4. Moteur selon l'une quelconque des revendications précédentes, **caractérisé en ce que** l'âme (16) de chaque agrafe (12) est incurvée en prenant appui contre la paroi interne de la culasse (11).

5. Moteur selon l'une quelconque des revendications précédentes, **caractérisé en ce que** l'âme (16) de chaque agrafe (12) est munie de rabats (13) pour le maintien de deux aimants (AP) consécutifs.

6. Moteur selon l'une quelconque des revendications précédentes, **caractérisé en ce que** la tôle métallique de chaque agrafe (12) est pliée en U.

7. Moteur selon l'une quelconque des revendications précédentes, **caractérisé en ce que** les moyens pour faciliter le glissement axial des agrafes sur la paroi interne cylindrique de la culasse (11) sont agencés entre deux ailettes de blocage (14) prévues à une extrémité de l'agrafe (12).

## Claims

1. Motor vehicle electric starter motor comprising:
- a field coil comprising permanent magnets inside a cylindrical casing of the field coil,
- a device for fixing the permanent magnets (AP) inside the cylindrical casing (11) of the field coil (10) of the electric motor, comprising elastic fasteners (12) arranged between the permanent magnets (AP) in order to hold the said magnets against the internal wall of the casing (11), each fastener (12) being produced from a metal sheet comprising a web (16) for holding two consecutive magnets (AP), the end (20) of each fastener (12) entering the casing (11) first when the permanent magnets (AP) are inserted, comprising means for facilitating the axial sliding of the fasteners on the cylindrical internal wall of the casing (11) whilst preventing any contact with an end edge of the end (20) of the said fastener against the internal wall of the casing (11), **characterised in that** the means consist of at least one protrusion (17) provided on the web (16) in order to move the edge of each fastener away from the casing.

2. Motor according to claim 1, **characterised in that** the said protrusion (17) is situated recessed from the edge, and between two fins (14) for axial locking of the magnets (AP).

3. Motor according to claim 1 or 2, **characterised in that** the protrusion (17) has a rounded shape.

4. Motor according to any one of the preceding claims, **characterised in that** the web (16) of each fastener (12) is curved, bearing against the internal wall of the casing (11).

5. Motor according to any one of the preceding claims, **characterised in that** the web (16) of each fastener (12) is provided with folds (13) for holding two consecutive magnets (AP).

6. Motor according to any one of the preceding claims, **characterised in that** the metal sheet of each fastener (12) is folded in a U.

7. Motor according to any one of the preceding claims, **characterised in that** the means for facilitating the axial sliding of the fasteners on the cylindrical internal wall of the casing (11) are arranged between two locking fins (14) provided at one end of the fastener (12).

## Patentansprüche

1. Elektromotor für einen Kraftfahrzeuganlasser mit
- einem Induktor, der Permanentmagnete in einem zylindrischen Joch des Induktors umfasst,
- einer Vorrichtung zum Befestigen der Permanentmagnete (AP) in dem zylindrischen Joch (11) des Induktors (10) des Elektromotors, die elastische Klammern (12) umfasst, die zwischen den Permanentmagneten (AP) angeordnet sind, um diese Magnete gegen die Innenwand des Jochs (11) zu halten, wobei jede Klammer (12) aus einem Metallblech ausgeführt ist, das einen Steg (16) zum Halten von zwei aufeinander folgenden Magneten (AP) umfasst, und das Ende (20) jeder Klammer (12) zuerst in das Joch (11) eindringt, wenn die Permanentmagnete (AP) eingesetzt werden, und Mittel umfasst, um das axiale Gleiten der Klammern auf der zylindrischen Innenseite des Jochs (11) zu erleichtern, ohne dass die Endkante des Endes (20) der besagten Klammer die Innenwand des Jochs (11) berührt, **dadurch gekennzeichnet, dass** die Mittel aus mindestens einem Höcker (17) bestehen, der auf dem Steg (16) vorgesehen ist, um die Kante jeder Klammer auf Abstand zu dem Joch zu halten.

2. Motor nach Anspruch 1, **dadurch gekennzeichnet, dass** der besagte Höcker (17) in einem Abstand zur Kante und zwischen zwei Flügeln (14) zum axialen Sichern der Magnete (AP) angeordnet ist.

3. Motor nach Anspruch 1 oder 2, **dadurch gekennzeichnet, dass** der Höcker (17) eine abgerundete Form aufweist.

4. Motor nach einem der vorhergehenden Ansprüche, **dadurch gekennzeichnet, dass** der Steg (16) jeder Klammer (12) gebogen und gegen die Innenwand des Jochs (11) gestützt ist.

5. Motor nach einem der vorhergehenden Ansprüche, **dadurch gekennzeichnet, dass** der Steg (16) jeder Klammer (12) mit Klappen (13) zum Halten von zwei aufeinander folgenden Magneten (AP) versehen ist.

6. Motor nach einem der vorhergehenden Ansprüche, **dadurch gekennzeichnet, dass** das Metallblech jeder Klammer (12) zu einem U gebogen ist.

7. Motor nach einem der vorhergehenden Ansprüche, **dadurch gekennzeichnet, dass** die Mittel zum Erleichtern des axialen Gleitens der Klammern auf der zylindrischen Innenwand des Jochs (11) zwischen zwei Sicherungsflügeln (14) angeordnet sind, die an einem Ende der Klammer (12) vorgesehen sind.
